# FASCICULE DE BREVET EUROPEEN

(11) **EP 1 601 444 B1**
(45) Date de publication et mention de la délivrance du brevet: **05.10.2016**
(21) Numéro de dépôt: 04714356.5
(22) Date de dépôt: 25.02.2004
(51) Int. Cl.: B01D 53/04, C01B 13/02

(54) **ADSORBEUR POUR LA PRODUCTION ET LA FOURNITURE D'OXYGENE A DES PASSAGERS D'UN AERONEF ET PROCEDE DE MISE EN OEUVRE D'UN GENERATEUR D'OXYGENE COMPRENANT UN TEL ADSORBEUR**
ADSORBER ZUR HERSTELLUNG UND ZUFÜHRUNG VON SAUERSTOFF AN PASSAGIERE EINES FLUGZEUGES UND VERFAHREN ZUM BETREIBEN EINES SAUERSTOFFERZEUGERS DAS DIESEN ADSORBER ENTHÄLT
ADSORBER FOR THE PRODUCTION AND SUPPLYING OXYGEN TO PASSENGERS OF AN AIRCRAFT AND METHOD FOR THE IMPLEMENTATION OF AN OXYGEN GENERATOR COMPRISING SAID ABSORBER

(30) Priorité: 05.03.2003 FR 0302708
(43) Date de publication de la demande: 07.12.2005
(73) Titulaire: L'AIR LIQUIDE, Société Anonyme pour l'Etude et l'Exploitation des Procédés Georges Claude, 75007 Paris (FR)
(72) Inventeur: LESSI, Stéphane, 19711 NEWARK, DE (US)
(74) Mandataire: Le Moenner, Gabriel
(86) Numéro de dépôt international: PCT/FR2004/050082
(87) Numéro de publication internationale: WO 2004/080796

(56) Documents cités:
- EP-A- 0 884 086
- GB-A- 2 013 101

## Description

La présente invention concerne les adsorbeurs pour la production et la fourniture d'oxygène à des passagers d'un aéronef, comprenant, dans une enveloppe cylindrique et autour d'un conduit central de gaz coaxial à l'enveloppe, une masse d'adsorbant adsorbant préférentiellement l'azote.

Le document EP 0 884 086 A2 décrit un procédé de séparation par adsorption utilisant un adsorbeur radial ayant un volume d'adsorbant V au moins égal à 1m3 et dont la hauteur H (transversale à la longueur traversée par le gaz) est au moins égale à 0,8 V^{0,35} et n'excède pas 3. V^{0,35}. Ce type d'adsorbeur radial est incompatible avec les contraintes aéronautiques.

Les générateurs d'oxygène embarqué (OBOGS) de type PSA trouvent une place de plus en plus importante dans les aéronefs civils, notamment dans les gros porteurs. Par opposition avec les générateurs d'oxygène d'avions de chasse classique, les générateurs pour avions de transport doivent traiter des débits d'air importants et donc mettre en oeuvre des quantités également importantes d'adsorbant qui représentent une fraction majoritaire de la masse totale du système.

Il existe donc un besoin d'optimiser la conception des adsorbeurs pour minimiser la masse d'adsorbant, sans réduire les performances.

La présente invention a pour objet un adsorbeur du type susmentionné dans lequel la masse d'adsorbant a une dimension axiale moyenne h supérieure à 25 cm et un diamètre extérieur (1) tel que h/(I) est compris entre 0,8 et 2.

Selon des caractéristiques plus particulières de l'invention h/(1) est compris entre 0,8 et 1,5, avantageusement entre 0,95 et 1,2.

Le rapport Sis entre les surfaces transversales S de la masse d'adsorbant et s du conduit central est compris entre 80 et 110, avantageusement entre 95 et 105.

L'adsorbant contient majoritairement une zéolithe fine de granulométrie inférieure à 0,8 mm, avantageusement comprise entre 0,6 et 0,7 mm, typiquement du type LiLSX.

La présente invention a également pour objet un procédé de mise en oeuvre d'un générateur d'oxygène comprenant deux adsorbeurs tels que définis ci-dessus opérant en alternance dans un cycle PSA, dans lequel le temps de cycle est inférieur à 6 secondes, avantageusement inférieur à 5 secondes, le débit de sortie de mélange enrichi en oxygène (typiquement a une concentration supérieure à 80 %) étant d'environ 300 litres par minute avec une pression de sortie supérieure à 2 bars relatifs (30 psig).

L'architecture d'adsorbeur et le procédé de mise en oeuvre selon l'invention permettent d'optimiser la section de passage efficace dans l'adsorbant en diminuant la longueur de tamis traversé par le gaz, cette optimisation de la masse d'adsorbant permettant - outre une diminution des coûts - de réduire le nombre total d'adsorbeurs nécessaires pour la production de forts débits de mélange enrichi en oxygène, ce qui permet de réduire considérablement les risques de panne, de faciliter la maintenance et la logeabilité dans les espaces confinés de l'aéronef.

La présente invention concerne également l'utilisation d'un tel adsorbeur dans un système de fourniture d'oxygène à des passagers d'un aéronef, en particulier d'un aéronef civil gros porteur.

D'autres caractéristiques et avantages de la présente invention ressortiront de la description suivante d'un mode de réalisation, donné à titre illustratif mais nullement limitatif, faite en relation avec le dessin annexé sur lequels :
La figure unique est une vue schématique mais à l'échelle en coupe longitudinale d'un mode de réalisation d'un adsorbeur selon l'invention convenant plus particulièrement pour des appareils civils gros porteurs.

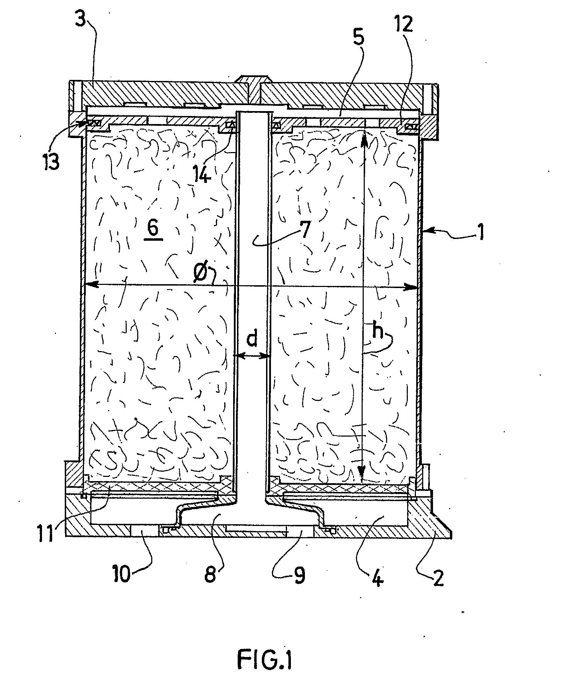

Sur la figure 1, on reconnaît les éléments constitutifs principaux d'un adsorbeur PSA, à savoir une virole ou enveloppe périphérique 1 fermée à ses extrémités par des flasques 2 et 3 définissant respectivement des chambres de distribution de fluide 4 et 5 de part et d'autre, axialement, d'une masse d'adsorbant 6 disposée dans la virole 1 et traversée centralement par un conduit 7 coaxial à la virole 1 et reliant la chambre supérieure 5 à un plénum inférieur 8 disposé centralement dans la chambre inférieure 4 et communiquant avec une circuiterie extérieure par un passage 9 formé dans le flasque inférieur 2. La chambre inférieure 4 communique, via au moins un passage 10 formé également dans le flasque inférieur 2, avec une canalisation externe de façon à regrouper les entrée/sortie de l'adsorbeur à une même extrémité de ce dernier. L'adsorbeur est destiné à être installé, typiquement par paires, dans un système PSA de séparation de l'oxygène de l'air pour alimenter un circuit de fourniture d'oxygène aux passagers d'un avion transporteur.

La masse annulaire d'adsorbant 6 est typiquement maintenue entre une paroi de fond perméable aux gaz 11, réalisée typiquement en métal fritté, et une paroi tasseuse poreuse supérieure 12, réalisée par exemple également en métal fritté ou en grillage fin, maintenue en position en appui contre l'extrémité supérieure de la masse d'adsorbant 6 par des joints à lèvres à effet de friction 13 et 14 coopérant respectivement avec la face interne de la virole 1 et avec la surface externe du conduit central 7.

Selon un aspect de l'invention, le conduit central 7 présente une section transversale s réduite pour conserver à la masse d'adsorbant une surface transversale S maximale. De plus, pour optimiser les pertes de charge tout en conservant une productivité en oxygène pur importante (supérieure à 7 l/mn/kg-tamis, typiquement supérieur à 8,5 l/mn/kg-tamis), la hauteur h (axiale) de la masse d'adsorbant, c'est-à-dire la longueur traversée par le gaz, est choisie telle que h/φ est compris entre 0,8 et 2, avantageusement entre 0,8 et 1,5 et de préférence entre 0,95 et 1,2, φ étant le diamètre intérieur de la virole 1.

Dans l'exemple représenté, avec un adsorbant haute performance du type zéolithe LiLSX échangée à plus de 88% avec du lithium, telle que décrite dans le document FR-A-2 765 491, au nom de la demanderesse, et à granulométrie inférieure à 0,8 mm, typiquement entre 0,6 et 0,7 mm, avec une hauteur h d'environ 30 cm, un diamètre φ également d'environ également 30 cm, un diamètre d de 30 mm, on réalise un adsorbeur présentant une masse optimisée d'adsorbant réduite à environ 14 kg qui, pour un débit de sortie de gaz de 300 l/mn sous une pression de sortie maximum de 2 bars relatifs, donne dans un cycle PSA d'environ 4,5 secondes, avec deux adsorbeurs identiques fonctionnant en alternance, une productivité en oxygène pur atteignant 8,9 l/mn/kg-tamis.

Quoique l'invention ait été décrite avec un mode de réalisation particulier, elle ne s'en trouve pas limitée mais est susceptible de modifications et de variantes qui apparaîtront à l'homme du métier dans le cadre des revendications ci-après.

## Revendications

1. Adsorbeur pour la production et la fourniture d'oxygène à des passagers d'un aéronef, comprenant, dans une enveloppe cylindrique et autour d'un conduit central de gaz coaxial à l'enveloppe, une masse d'adsorbant adsorbant préférentiellement l'azote, **caractérisé en ce que** la masse d'adsorbant (6) a une dimension axiale moyenne h, c'est-à-dire la longueur traversée par le gaz, supérieure à 25 cm et un diamètre extérieur Φ tels que h/Φ est compris entre 0,8 et 2.

2. Adsorbeur selon la revendication 1, **caractérisé en ce que** h/Φ est compris entre 0,8 et 1,5.

3. Adsorbeur selon la revendication 2, **caractérisé en ce que** h/Φ est compris entre 0,95 et 1,2.

4. Adsorbeur selon l'une des revendications précédentes, **caractérisé en ce que** le rapport S/s entre les surfaces transversales S de la masse d'adsorbant (6) et s du conduit central (7) est compris entre 80 et 110.

5. Adsorbeur selon la revendication 4, **caractérisé en ce que** S/s est compris entre 95 et 105.

6. Adsorbeur selon l'une des revendications précédentes, **caractérisé en ce que** l'adsorbant contient majoritairement une zéolithe de granulométrie inférieure à 0,8 mm.

7. Adsorbeur selon la revendication 6, **caractérisé en ce que** la 0zéolithe a une granulométrie entre 0,6 et 0,7 mm.

8. Adsorbeur selon la revendication 6 ou la revendication 7, **caractérisé en ce que** la zéolithe est échangée à plus de 88% avec du lithium.

9. Adsorbeur selon la revendication 8, **caractérisé en ce que** la hauteur h est de 30 cm, le diamètre extérieur ø de 30 cm et le diamètre d du conduit central de 30 mm.

10. Adsorbeur selon l'une quelconque des revendications 1 à 9, **caractérisé en ce qu'**il comprend une enveloppe périphérique (1) fermée à ses extrémités par des flasques (2) et (3) définissant respectivement des chambres de distribution de fluide (4) et (5) de part et d'autre, axialement, de la masse d'adsorbant (6) disposée dans la virole (1) et traversée centralement par le conduit (7) coaxial à la virole (1) et reliant la chambre supérieure (5) à un plénum inférieur (8) disposé centralement dans la chambre inférieure (4) et communiquant avec une circuiterie extérieure par un passage (9) formé dans le flasque inférieur (2), la chambre inférieure (4) communicant, via au moins un passage (10) formé également dans le flasque inférieur (2), avec une canalisation externe de façon à regrouper les entrée/sortie de l'adsorbeur à une même extrémité de ce dernier.

11. Adsorbeur selon la revendication 10, **caractérisé en ce que** la masse annulaire d'adsorbant (6) est maintenue entre une paroi de fond perméable aux gaz (11), et une paroi tasseuse poreuse supérieure (12), maintenue en position en appui contre l'extrémité supérieure de la masse d'adsorbant (6) par des joints à lèvres à effet de friction (13) et (14) coopérant respectivement avec la face interne de la virole (1) et avec la surface externe du conduit central (7).

12. Procédé de mise en oeuvre d'un générateur d'oxygène comprenant deux adsorbeurs selon l'une des revendications précédentes opérant en alternance dans un cycle PSA, dans lequel le temps de cycle est inférieur à 6 secondes et le débit de sortie de gaz d'environ 300 1/mn pour une pression de sortie de gaz supérieure à 2 bar relatif.

13. Utilisation d'un adsorbeur selon l'une des revendications 1 à 11 dans un système de fourniture d'oxygène à des passagers d'un aéronef.

## Patentansprüche

1. Adsorber für die Produktion und Bereitstellung von Sauerstoff an Flugzeuginsassen, welcher in einer zylindrischen Hülle und um eine zu der Hülle koaxiale, zentrale Gasleitung herum eine Adsorptionsmittelmasse umfasst, welche bevorzugt Stickstoff adsorbiert, **dadurch gekennzeichnet, dass** die Adsorptionsmittelmasse (6) eine mittlere axiale Größe h, das heißt vom Gas durchströmte Länge, von über 25 cm und einen äußeren Durchmesser φ besitzt, sodass h/ φ zwischen 0,8 und 2 beträgt.

2. Adsorber nach Anspruch 1, **dadurch gekennzeichnet, dass** h/ φ zwischen 0,8 und 1,5 beträgt.

3. Adsorber nach Anspruch 2, **dadurch gekennzeichnet, dass** h/ φ zwischen 0,95 und 1,2 beträgt.

4. Adsorber nach einem der vorstehenden Ansprüche, **dadurch gekennzeichnet, dass** das Verhältnis S/s zwischen den Querflächen S der Adsorptionsmittelmasse (6) und s der zentralen Leitung (7) zwischen 80 und 110 beträgt.

5. Adsorber nach Anspruch 4, **dadurch gekennzeichnet, dass** S/s zwischen 95 und 105 beträgt.

6. Adsorber nach einem der vorstehenden Ansprüche, **dadurch gekennzeichnet, dass** das Adsorptionsmittel mehrheitlich einen Zeolith einer Korngröße unter 0,8 mm enthält.

7. Adsorber nach Anspruch 6, **dadurch gekennzeichnet, dass** der Zeolith eine Korngröße zwischen 0,6 und 0,7 mm besitzt.

8. Adsorber nach Anspruch 6 oder Anspruch 7, **dadurch gekennzeichnet, dass** der Zeolith zu mehr als 88 % mit Lithium ausgetauscht ist.

9. Adsorber nach Anspruch 8, **dadurch gekennzeichnet, dass** die Höhe h 30 cm, der äußere Durchmesser 0 30 cm und der Durchmesser d der zentralen Leitung 30 mm beträgt.

10. Adsorber nach einem der Ansprüche 1 bis 9, **dadurch gekennzeichnet, dass** er eine umlaufende Hülle (1) umfasst, die an ihren Enden von Flanschen (2) und (3) geschlossen ist, welche jeweils Fluid-Verteilungskammern (4) und (5) beidseits axial der Adsorptionsmittelmasse (6) definieren, welche in dem Mantel (1) angeordnet ist und zentral von der zum Mantel (1) koaxialen Leitung (7) durchlaufen wird und die obere Kammer (5) mit einer unteren Sammelkammer (8) verbindet, welche zentral in der unteren Kammer (4) angeordnet ist und über einen Durchlass (9), welcher in dem unteren Flansch (2) gebildet ist, mit einem äußeren Kreislauf kommuniziert, wobei die untere Kammer (4) über mindestens einen Durchlass (10), welcher ebenfalls in dem unteren Flansch (2) gebildet ist, derart mit einem äußeren Leitungsnetz kommuniziert, dass der Eingang/Ausgang des Adsorbers mit einem gleichen Ende des letzteren zusammengefasst sind.

11. Adsorber nach Anspruch 10, **dadurch gekennzeichnet, dass** die ringförmige Adsorptionsmittelmasse (6) zwischen einer gasdurchlässigen Bodenwand (11) und einer porösen oberen Presswand (12) gehalten wird, welche gegen das obere Ende der Adsorptionsmittelmasse (6) gedrückt in Position gehalten wird von Lippendichtungen mit Reibungseffekt (13) und (14), welche jeweils mit der Innenfläche des Mantels (1) und mit der Außenfläche der zentralen Leitung (7) zusammenwirken.

12. Verfahren zum Betreiben eines Sauerstoffgenerators, welcher zwei Adsorber nach einem der vorstehenden Ansprüche umfasst, welche abwechselnd in einem PSA-Zyklus laufen, in welchem die Zykluszeit unter 6 Sekunden und der Gasausgangsstrom ungefähr 300 1/min bei einem relativen Gasausgangsdruck über 2 bar beträgt.

13. Verwendung eines Adsorbers nach einem der Ansprüche 1 bis 11 in einem System zur Bereitstellung von Sauerstoff an Flugzeuginsassen.

## Claims

1. Adsorber for the production and supplying of oxygen to passengers of an aircraft, comprising, in a cylindrical casing and around a central gas duct coaxial to the casing, an adsorbent mass adsorbing preferentially nitrogen, **characterised in that** the adsorbent mass (6) has an average axial dimension h, i.e. the length passed through by the gas, greater than 25 cm and an outer diameter φ such that h/φ is between 0.8 and 2.

2. Adsorber according to claim 1, **characterised in that** h/φ is between 0.8 and 1.5.

3. Adsorber according to claim 2, **characterised in that** h/φ is between 0.95 and 1.2.

4. Adsorber according to one of the preceding claims, **characterised in that** the ratio S/s between the transverse surfaces S of the mass of adsorbent (6) and s of the central duct (7) is between 80 and 110.

5. Adsorber according to claim 4, **characterised in that** S/s is between 95 and 105.

6. Adsorber according to one of the preceding claims, **characterised in that** the adsorbent contains mostly a zeolite with a granulometry less than 0.8 mm.

7. Adsorber according to claim 6, **characterised in that** the zeolite has a granulometry between 0.6 and 0.7 mm.

8. Adsorber according to claim 6 or claim 7, **characterised in that** the zeolite is exchanged more than 88% with lithium.

9. Adsorber according to claim 8, **characterised in that** the height h is 30 cm, the outer diameter Ø 30 cm and the diameter d of the central duct 30 mm.

10. Adsorber according to any of claims 1 to 9, **characterised in that** it comprises a peripheral casing (1) closed at the ends thereof by flanges (2) and (3) defining respectively fluid distribution chambers (4) and (5) on either side, axially, of the mass of adsorbent (6) arranged in the ferrule (1) and passed through centrally by the duct (7) coaxial to the ferrule (1) and connecting the upper chamber (5) to a lower plenum (8) arranged centrally in the lower chamber (4) and communicating with an exterior circuitry via a passage (9) formed in the lower flange (2), with the lower chamber (4) communicating, via at least one passage (10) also formed in the lower flange (2), with an external pipe in such a way as to group together the inlet/outlet of the adsorber at the same end of the latter.

11. Adsorber according to claim 10, **characterised in that** the annular mass of adsorbent (6) is maintained between a bottom wall permeable to gases (11), and an upper porous tamper wall (12), maintained in position bearing against the upper end of the mass of adsorbent (6) by friction effect lip-seals (13) and (14) cooperating respectively with the inner face of the ferrule (1) and with the outer surface of the central duct (7).

12. Method for implementing an oxygen generator comprising two adsorbers according to one of the preceding claims operating alternately in a PSA cycle, wherein the cycle time is less than 6 seconds and the gas outlet flow rate of about 300 1/mn for a gas outlet pressure greater than 2 bar relative.

13. Use of an adsorber according to one of claims 1 to 11 in a system for supplying oxygen to passengers of an aircraft.
